(19) Europäisches Patentamt
European Patent Office
Office européen des brevets

(11) EP 0 411 415 B1

(12) EUROPÄISCHE PATENTSCHRIFT

(45) Veröffentlichungstag und Bekanntmachung des Hinweises auf die Patenterteilung:
**24.04.1996 Patentblatt 1996/17**

(51) Int Cl.[6]: **C08G 65/32**, C08G 65/20

(21) Anmeldenummer: **90114002.0**

(22) Anmeldetag: **21.07.1990**

(54) **Polyethercarbonsäureester und ihre Herstellung**

Polyethercarboxylic esters and their preparation

Esters d'acides carboxyliques de polyéthers et leur préparation

(84) Benannte Vertragsstaaten:
**BE CH DE FR GB IT LI NL**

(30) Priorität: **29.07.1989 DE 3925255**

(43) Veröffentlichungstag der Anmeldung:
**06.02.1991 Patentblatt 1991/06**

(73) Patentinhaber: **BASF Aktiengesellschaft**
**D-67063 Ludwigshafen (DE)**

(72) Erfinder: **Hickmann, Eckhard, Dr.**
**D-6701 Dannstadt-Schauernheim (DE)**

(56) Entgegenhaltungen:
- **CHEMICAL PATENTS INDEX, BASIC ABSTRACTS JOURNAL Section A, week 8647, 21.01.1987, A0414, no 86-308838/47, Derwent Publ. Ltd, London, GB; & JP-A-61228007 /FUJI/ 11.10.1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 411 415 B1

Printed by Jouve, 75001 PARIS (FR)

## Beschreibung

Diese Erfindung betrifft neue Polyethercarbonsäureester der allgemeinen Formel

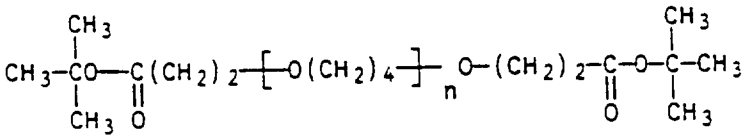

I,

in der n eine Zahl von 3 bis 70 bedeutet, sowie ein Verfahren zu ihrer Herstellung.

Die neuen Polyethercarbonsäureester der Formel I sind Bis-alkoxicarbonyl-ethylierte Polytetrahydrofurane, die wertvolle Bausteine für Polymere darstellen.

Polytetrahydrofurane der allgemeinen Formel

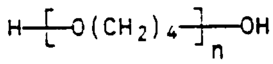

II,

(im folgenden PTHF genannt) werden z.B. durch kationische Polymerisation von Tetrahydrofuran (im folgenden THF genannt) hergestellt. In der Strukturformel II gibt der Polymerisationsgrad n die Anzahl der vom THF abgeleiteten Oxi-butan-1,4-diyl-Einheiten pro Molekül an; er liegt üblicherweise bei n = 3 (entsprechend einem mittleren Molgewicht von $\overline{MG}$ = 234) bis n = etwa 70 (entsprechend einem $\overline{MG}$ von etwa 5000). Der Polymerisationsgrad n bzw. das diesem Wert entsprechende mittlere Molgewicht $\overline{MG}$, durch die die bei der Polymerisation von THF erhältlichen PTHF-Gemische charakterisiert werden, können z.B. durch osmometrische oder titrimetrische Analysen ermittelt werden. Technisch besonders interessant sind z.B. die folgenden PTHF-Gemische:

PTHF 250 ($\overline{MG}$ = ca 250, $\bar{n}$ = ca 3), PTHF 650 ($\overline{MG}$ = ca 650, $\bar{n}$ = ca 9), PTHF 1000 ($\overline{MG}$ = ca 1000, $\bar{n}$ = ca 14), PTHF 2000 ($\overline{MG}$ = ca 2000, $\bar{n}$ = ca 27), PTHF 2900 ($\overline{MG}$ = ca 2900, $\bar{n}$ = ca 40) und PTHF 4500 ($\overline{MG}$ = ca 4500, $\bar{n}$ = ca 62).

Jedes dieser PTHF-Gemische enthält ein breites Spektrum von PTHF-Homologen, deren Anzahl ca 10 bis 20 im niedrigen Molmassenbereich beträgt und auf über 30 im hohen Molmassenbereich ansteigt.

PTHF wird als α, ω-Diol für die Herstellung von Polymeren verwendet. Hierbei zeichnet sich PTHF wegen seiner wertvollen Eigenschaften als Baustein für elastomere und thermoplastische Polymeren aus (P. Dreyfuss "Handbook of Elastomers, New Developments and Technology", 1988, S. 695).

Als α,ω-Diol ist die Reaktionsfähigkeit des PTHF allerdings auf die typischen Reaktionen von primären Alkoholen beschränkt. Es hat daher nicht an Versuchen gefehlt, dem PTHF durch Modifizieren der Endgruppen eine andere Reaktivität zu verleihen, um dadurch seine Verwendungsmöglichkeiten zu erweitern. So liefert z.B. die Umsetzung des PTHF mit Diisocyanaten im Molverhältnis 1 : 2 PTHF-Diurethane mit freien, endständigen Isocyanatgruppen, und durch Umesterung von (Meth-)Acrylsäureestern mit PTHF erhält man PTHF-bis(meth-)acrylate. Bei derartigen Umsetzungen mit Gemischen von PTHF-Homologen erhält man wiederum Gemische von homologen PTHF-Derivaten, die sich strukturell ebenfalls nur durch die unterschiedliche Zahl der wiederkehrenden Oxi-butan-1,4-diyl-Einheiten in der Polyetherkette unterscheiden.

Interessanterweise ist ein PTHF mit den Endgruppen $-O-CH_2-CH_2-COOAlkyl$ (d.h. ein Bis-alkoxicarbonyl-ethyliertes PTHF) noch nicht beschrieben worden.

Gegenstand dieser Erfindung sind nun die neuen Polyethercarbonsäureester der allgemeinen Formel I und ihre Herstellung. Nach dem Verfahren der Erfindung stellt man die Polyethercarbonsäureester dadurch her, daß man Polytetrahydrofurane der allgemeinen Formel

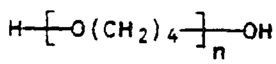

II,

in der n für eine Zahl von 3 bis 70 steht, in Gegenwart von basisch wirkenden Stoffen mit Acrylsäureester der Formel

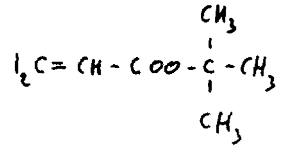

III,

In den erfindungsgemäß umzusetzenden Polytetrahydrofuranen der Formel II steht n für eine Zahl von 3 bis 70, vorzugsweise 4 bis 40.

Als basisch wirkende Stoffe, die als Katalysatoren zugegeben werden, kommen z.B. Kalium- oder Natriumhydroxid,

Alkalialkoholate, insbesondere tertiäre Alkalialkoholate, wie Kalium-tert.-butanolat, quartäre Ammoniumverbindungen oder quartäre Phosphoniumverbindungen in Betracht. Besonders gute Ergebnisse werden mit quartären Ammoniumhydroxiden und quartären Phosphoniumhydroxiden erzielt. Zweckmäßigerweise bevorzugt man quartäre Ammonium- oder quartäre Phosphonium-hydroxide, die sich in organischen Lösungsmitteln, wie aliphatischen und aromatischen Kohlenwasserstoffen, Ethern, Alkoholen, tert. Aminen, Ketonen und Estern gut lösen. Beispiele sind: Tetrapropyl-, Tetra-n-butyl-, Trioctylmethyl-, Dodecyltrimethyl-, Didodecyldimethyl-, Hexadecyltrimethyl-, Octadecyltrimethyl-, Benzyltrimethyl-, Benzyltriethyl-, Dibenzyldimethyl-ammoniumhydroxid, N-Dodecyl-und 4-Dimethylamino-N-hexadecyl-pyridiniumhydroxid, Trioctyimethyl-, Hexadecyltrimethyl-und Triphenylmethylphosphoniumhydroxid. Diese lipophilen Oniumhydroxide kann man als solche einsetzten. Man kann sie aber auch in situ aus lipophilen Oniumsalzen und Metallhydroxiden, wie einem Alkalimetallhydroxid, z. B. Natrium- oder Kaliumhydroxid, oder einem stärker hydrophilen Oniumhydroxid, wie Tetramethylammoniumhydroxid oder Cholin, erzeugen. Die in-situ-Herstellung von katalytisch ausgezeichnet wirksamen Ammonium-und Phosphonium-hydroxiden aus der Vielzahl technisch leicht zugänglicher quartär-Ammonium- und quartär-Phosphoniumcnloride, -bromide, -methosulfate, -hydrogensulfate, -sulfate, -formiate und -hydrogencarbonate macht das erfindungsgemäße Verfahren besonders breit anwendbar. Als Co-Katalysatoren kann man Alkoholate und/oder Komplexierungsmittel für Kationen, z.B. Kronenether, Polyethylenglykole und deren Ether oder TDA-1® (Rhône-Poulenc) zusetzen.

Die genannten basisch wirkenden Stoffe werden gewöhnlich in Anteilen von 0,01 bis 10 Mol%, vorzugsweise in 0,5 bis 5 Mol%, bezogen auf PTHF, eingesetzt. Man kann sie wahlweise zu Beginn der Reaktion ganz oder teilweise mit vorlegen und/oder während der Reaktion kontinuierlich oder diskontinuierlich zudosieren. Manchmal ist es vorteilhaft, zum Erzielen eines quantitativen Umsatzes Katalysator nachzudosieren.

Das Mengenverhältnis von Acrylester zu PTHF kann in weiten Grenzen gewählt werden. Um jedoch einen möglichst vollständigen Umsatz zum Bisaddukt zu erzielen, setzt man pro Mol PTHF 1,8 bis 3, vorzugsweise 2 bis 2,5 Mol Acrylsäureester ein.

Man kann die Umsetzung in Gegenwart von organischen Lösungsmitteln vornehmen. Als Lösungsmittel kommen z.B. aliphatische oder aromatische Lösungsmittel, z.B. Ether, wie Methyl tert.butylether, Ethylenglykoldimethylether oder Tetrahydrofuran, tert.-Amine, wie Tributylamin, Ketone, wie Aceton oder Methylethylketon und Ester, wie Essigsäuremethylester in Betracht. Geeignet sind auch Alkohole, sofern ihr $pK_A$-Wert >ca 18 ist, wie tert. Butanol. Am vorteilhaftesten arbeitet man jedoch lösungsmittelfrei.

Die Vermischung der Reaktionskomponenten kann kontinuierlich, z. B. in einer Rührkesselkaskade oder in einem Schlaufenreaktor oder diskontinuierlich z.B. in einem Rührkessel erfolgen. Bei diskontinuierlicher Fahrweise legt man das gegebenenfalls gelöste PTHF ganz oder teilweise vor und gibt den Acrylester und gegebenenfalls das restliche PTHF getrennt oder als Lösung gemeinsam zu. Die Umsetzung wird üblicherweise im Temperaturbereich von 0°C bis 100°C, bevorzugt bei 20°C bis 40°C durchgeführt.

Beispiel 1

Addition von PTHF 250 an Acrylsäure-tert.-butylester

Zu einem Gemisch aus 125 g PTHF 250 (mit n = 3) und 4,0 g Benzyl-trimethylammoniumhydroxid tropft man unter Rühren innerhalb von 4 h bei 22 bis 30°C 154 g Acrylsäure-tert.-butylester. Man läßt das Reaktionsgemisch noch 4 h bei ca 30°C nachreagieren. Dann neutralisiert man es durch Zugabe von festem Kohlendioxid. Nach dem Abziehen der Niedrigsieder am Rotationsverdampfer bei 50 bis 60°C Badtemperatur im Wasserstrahlvakuum erhält man 252 g Rückstand. Der Rückstand hat nach dem NMR-Spektrum die folgende Zusammensetzung.

ca. 99 Mol% Addukt der Formel I mit n = 3
ca. 1 Mol% PTHF.

Der entsprechende PTHF-Ester ist nicht feststellbar. Die osmometrisch in Aceton als Lösungsmittel bestimmte mittlere Molmasse $\overline{MG}$ des Adduktes beträgt 500 (ber.: 506). Es ist praktisch ausschließlich das erwünschte Bis-Addukt von PTHF an den Acrylsäureester entstanden.

Beispiel 2

Addition von PTHF 650 an Acrylsäure-tert.-butylester

Zu einem Gemisch aus 65,1 g PTHF 650, 0,28 g KOH und 1,6 g Tetra-n-butylammoniumbromid tropft man unter Rühren innerhalb von 2 h bei 22 bis 25°C 28,2 g Acrylsäure-tert.-butylester. Man läßt das Reaktionsgemisch noch 2 h bei ca 25°C nachreagieren. Man arbeitet dann wie in Beispiel 1 auf und erhält 85,5 g Rückstand mit folgender Zusammensetzung:

ca. 98 Mol% Addukt der Formel I mit n = 7
ca. 2 Mol% PTHF.

Der entsprechende PTHF-Ester ist nicht nachweisbar. Die osmometrisch bestimmte mittlere Molmasse $\overline{MG}$ des Adduktes beträgt 870 (ber.: 906). Auch bei der in diesem Beispiel stattfindenden in-situ-Herstellung des quartär-Ammoniumsalzes entsteht praktisch nur das erwünscnte Bis-Addukt.

Beispiele 3 bis 11

Polytetrahydrofurane mit unterschiedlichen mittleren Molmassen wurden entsprechend der in den Beispielen 1 und 2 beschriebenen Arbeitsweisen mit Acrylsäure-tert.-butylester umgesetzt. Einzelheiten sind der folgenden Tabellen zu entnehmen.

Tabelle 1

| Beispiel | PTHF $\overline{MG}$ | PTHF Menge (g) | Acrylsäure-tert.-butylester (g) | Katalysator Formel | Katalysator Menge (g) | Lösungsmittel | Lösungsmittel Menge (g) |
|---|---|---|---|---|---|---|---|
| 3 | 250 | 50 | 56,3 | $(n-C_4H_9)_4N^+OH^-$<br>KOH | 2,6<br>0,56 | - | - |
| 4 | 650 | 325 | 154 | $(C_6H_5CH_2)(CH_3)_3N^+OH^-$ | 4,0 | - | - |
| 5 | 650 | 13 000 | 6 200 | $(C_6H_5CH_2)(CH_3)_3N^+OH^-$ | 240 | | |
| 6 | 650 | 65,9 | 28,2 | $(n-C_4H_9)_4N^+OH^-$ | 1,4 | - | - |
| 7 | 1 000 | 200 | 61,6 | $(C_6H_5CH_2)(CH_3)_3N^+OH^-$ | 1,6 | THF | 200 |
| 8 | 1 000 | 15 000 | 4 300 | $(C_6H_5CH_2)(CH_3)_3N^+OH^-$ | 69 | THF | 15 000 |

Tabelle I (Fortsetzung)

| Beispiel | PTHF | | Acrylsäure-tert.-butylester | Katalysator | | Lösungsmittel | |
|---|---|---|---|---|---|---|---|
| | $\overline{MG}$ | Menge (g) | (g) | Formel | Menge (g) | | Menge (g) |
| 9 | 2 000 | 200 | 61,6 | $(C_6H_5CH_2)(CH_3)_3N^+OH^-$ | 0,8 | THF | 200 |
| 10 | 250 | 12 500 | 14 100 | $(C_6H_5CH_2)(CH_3)_3N^+OH^-$<br>$(n\text{-}C_4H_9)_4N^+Br^-$<br>KOH | 200<br>160<br>140 | - | - |
| 11 | 250 | 50 | 56,3 | $(n\text{-}C_4H_9)_4N^+HSO_4^-$<br>KOH | 3,4<br>1,1 | - | - |

Tabelle 2

| Beispiel | Reaktions-temperatur (°C) | Reaktions-dauer (h) | Reaktionsprodukt Menge (g) | Reaktionsprodukt Zusammensetzung (Mol%) |
|---|---|---|---|---|
| 3 | 20-26 | 6,5 | 96,5 | 93 Addukt I (n=3)<br>2 PTHF<br>5 PTHF-Ester |
| 4 | 20-25 | 6 | | 98 Addukt I (n=7)<br>1 PTHF<br>1 PTHF-Ester |
| 5 | 22-28 | 40 | 18 100 | 97 Addukt (n=7)<br>2 PTHF<br>1 PTHF-Ester |
| 6 | 20-25 | 16 | 85,6 | 93 Addukt (n=7)<br>7 PTHF<br>kein PTHF-Ester |
| 7 | 23-26 | 5 | 241,2 | 95 Addukt I (n=12)<br>3 PTHF<br>2 PTHF-Ester |
| 8 | 20-30 | 22 | 18 800 | 97 Addukt I (n=12)<br>2 PTHF<br>1 PTHF-Ester |

Tabelle 2 (Fortsetzung)

| Beispiel | Reaktions-temperatur (°C) | Reaktions-dauer (h) | Reaktionsprodukt Menge (g) | Reaktionsprodukt Zusammensetzung (Mol%) |
|---|---|---|---|---|
| 9 | 20-22 | 8 | 217,8 | 94 Addukt I (n=23)<br>5 PTHF<br>1 PTHF-Ester |
| 10 | 20-25 | 36 | 24 900 | 95 Addukt I (n=3)<br>3 PTHF<br>2 PTHF-Ester |
| 11 | 20-24 | 22 | 94,0 | 97 Addukt I (n=3)<br>2 PTHF<br>1 PTHF-Ester |

## Patentansprüche

**1.** Polyethercarbonsäureester der allgemeinen Formel

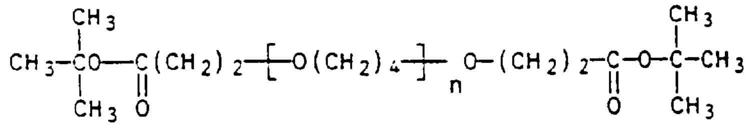 I,

in der n eine Zahl von 3 bis 70 bedeutet.

2. Verfahren zur Herstellung von Polyethercarbonsäureestern nach Anspruch 1, dadurch gekennzeichnet, daß man Polytetrahydrofurane der allgemeinen Formel

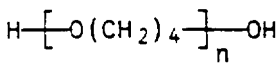 II,

in der n für eine Zahl von 3 bis 70 steht, in Gegenwart von basisch wirkenden Stoffen mit Acrylsäureester der Formel

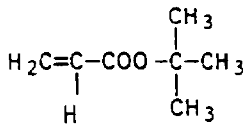 III,

3. Verfahren nach Anspruch 2, dadurch gekennzeichnet, daß man als basisch wirkende Stoffe quartäre Ammonium- oder Phosphoniumverbindungen verwendet.

## Claims

1. A polyethercarboxylic ester of the general formula

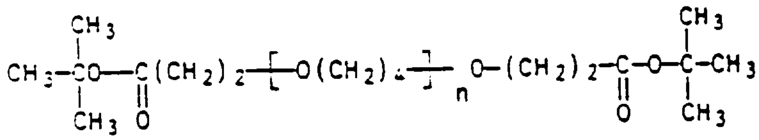 I

where n is from 3 to 70.

2. A process for the preparation of a polyethercarboxylic ester as claimed in claim 1, wherein a polytetrahydrofuran of the general formula

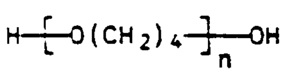 II

where n is from 3 to 70, is reacted with an acrylate of the formula

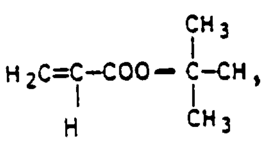 III

in the presence of a basic substance.

3. A process as claimed in claim 2, wherein the basic substance used is a quaternary ammonium or phosphonium compound.

## Revendications

1. Polyéthercarboxylates de la formule générale :

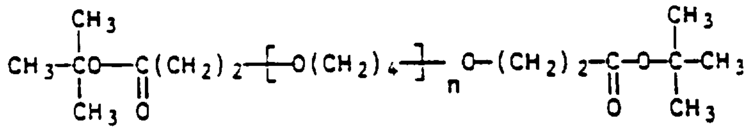

(I)

dans laquelle n représente un nombre dont la valeur varie de 3 à 70.

**2.** Procédé de préparation de polyéthercarboxylates suivant la revendication 1, caractérisé en ce que l'on fait réagir des polytétrahydrofurannes de la formule générale :

$$H{-}[-O(CH_2)_4-]_n\,OH \qquad (II)$$

dans laquelle n représente un nombre dont la valeur varie de 3 à 70, en présence d'une substance à activité basique, avec des acrylates de la formule :

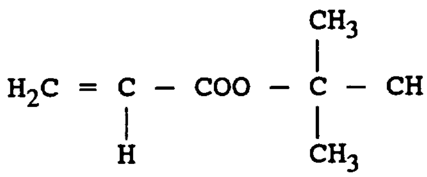

(III)

**3.** Procédé suivant la revendication 2, caractérisé en ce que l'on utilise des composés de phosphonium ou d'ammonium quaternaire à titre de substances à activité basique.